# FASCICULE DE BREVET EUROPEEN

(11) **EP 2 743 601 B1**
(45) Date de publication et mention de la délivrance du brevet: **14.11.2018**
(21) Numéro de dépôt: 13193924.1
(22) Date de dépôt: 21.11.2013
(51) Int. Cl.: F24H 4/04, F24H 9/14, F24D 11/02, F24F 3/06, F24F 5/00

(54) **Module intérieur compact pour installation de régulation thermique à pompe à chaleur**
Kompaktes Innenmodul für Wärmregulierungsanlage mit Wärmepumpe
Compact inner module for thermal control facility with heat pump

(30) Priorité: 22.11.2012 FR 1261149
(43) Date de publication de la demande: 18.06.2014
(73) Titulaire: Société Industrielle de Chauffage (SIC), 59660 Merville (FR)
(72) Inventeur: Clement, Jean-Francis, 85000 La Roche sur Yon (FR)
(74) Mandataire: Petit, Maxime

(56) Documents cités:
- EP-A1- 1 767 879
- EP-A1- 2 372 258
- EP-A2- 2 151 633
- EP-A2- 2 428 740
- WO-A1-96/10155
- FR-A1- 2 503 843
- GB-A- 462 930
- JP-A- S57 210 235
- US-A- 2 711 473
- US-A- 4 955 930

## Description

La présente invention concerne un module intérieur compact pour une installation de chauffage à pompe à chaleur.

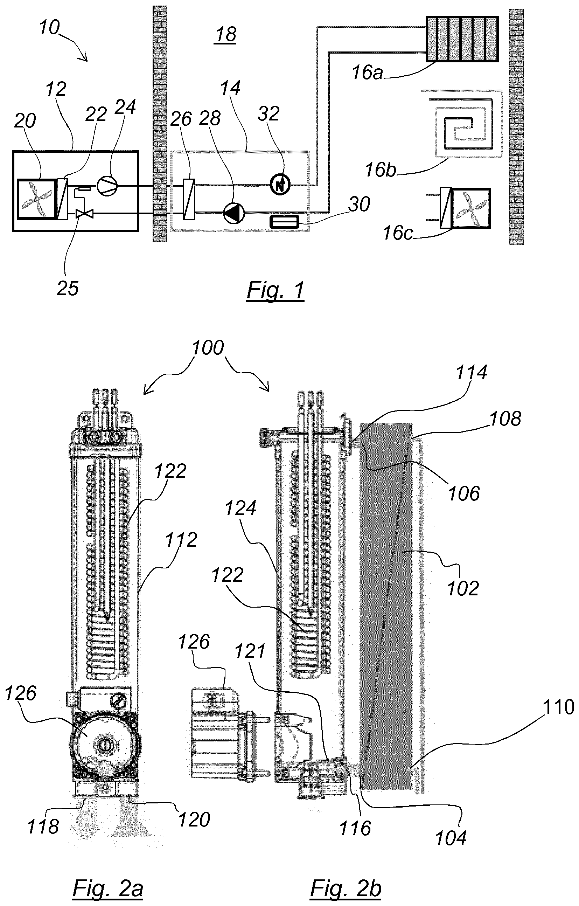

Une installation de chauffage à pompe à chaleur 10 connue est représentée sur la figure 1. Une telle installation est notamment mise en oeuvre pour chauffer des locaux à l'aide d'eau chauffée au moyen de la pompe à chaleur.

Une telle installation comprend classiquement une unité extérieure 12 de récupération de calories, une unité intérieure 14 d'échange de calories et un ou plusieurs émetteurs de chaleur 16a, 16b ou 16c qui chauffent un local 18. A titre d'exemples, on a représenté ici comme émetteurs de chaleur, un radiateur 16a, un plancher chauffant 16b et un climatiseur 16c.

L'unité extérieure 12 puise des calories d'une source à l'extérieur du local à chauffer. En l'espèce, la source de calories est un flux d'air créé par un ventilateur 20 de l'unité extérieure 12. Les calories puisées sont récupérées par un fluide frigorigène au niveau d'un premier échangeur de chaleur, en l'espèce un évaporateur 22. Le fluide frigorigène, liquide en entrée de l'évaporateur 22, se vaporise dans celui-ci. Un compresseur 24 élève ensuite la pression le fluide frigorigène ainsi vaporisé.

L'unité extérieure 12 comporte enfin un détendeur 25 pour détendre le fluide frigorigène après que celui-ci ait retrouvé son état liquide dans un deuxième échangeur de chaleur 26 de l'unité intérieure 14, en l'espèce un condenseur, et avant que le fluide frigorigène ne traverse à nouveau l'évaporateur 22.

Pour assurer le transfert de l'énergie dans le deuxième échangeur de chaleur 26 et chauffer de l'eau au moyen des calories transportées par le fluide frigorigène provenant de l'unité extérieure 12, l'unité intérieure 14 comprend une pompe 28 de mise en circulation de l'eau dans le circuit de chauffage vers l'émetteur ou les émetteurs 16a, 16b, 16c. Ici, cette pompe 28 de mise en circulation est disposée en amont du deuxième échangeur de chaleur 26. L'unité intérieure 14 comprend aussi un réservoir d'eau 30 et une source de chaleur d'appoint 32.

L'eau, chauffée dans le deuxième échangeur de chaleur 26, traverse ensuite un voire plusieurs émetteurs de chaleur où elle cède des calories à l'air dans le local à chauffer 18.

Le même type d'installation peut être mis en oeuvre pour rafraichir l'air à l'intérieur du local 18. Dans ce cas, le circuit entre l'unité intérieure 14 et l'unité extérieure 12 est alors inversé, de sorte que le deuxième échangeur de chaleur 26 est alors un évaporateur pour le fluide frigorigène, alors que le premier échangeur de chaleur 22 est alors un condenseur pour le fluide frigorigène. L'eau mise en circulation entre le deuxième échangeur de chaleur 26 et les émetteurs 16a, 16b, 16c est alors plus fraiche que l'air dans le local 18.

La mise en oeuvre d'une telle unité intérieure présente de nombreux inconvénients parmi lesquels :
- un surcoût de l'installation du fait notamment du nombre de pièces mises en oeuvre, et du nombre de raccords hydrauliques, ceux-ci induisant notamment une tuyauterie importante ;
- un encombrement important de l'installation ;
- un temps de montage important ;
- un risque de fuite important du fait du nombre de raccords hydrauliques.

Les mêmes problèmes se posent également dans les installations de climatisation à l'aide d'eau froide.

De plus, le document EP-A-2 372 258 concerne une bouteille de découplage hydraulique entre plusieurs circuits d'une installation de chauffage et/ou de climatisation. et montre les caractéristiques du préambule de la revendication 1. Le document FR-A-2 503 843 concerne un vase de couplage hydraulique et de raccordement mécanique. Le document EP-A-2 151 633 concerne une unité intérieure comprenant un échangeur thermique à fluide frigorigène.

Le but de l'invention est de proposer un module intérieur compact permettant d'éviter au moins en partie les inconvénients susmentionnés.

Pour cela, l'invention propose un module intérieur pour installation de régulation thermique, le module intérieur comprenant :
- un dispositif d'échange thermique destiné à échanger des calories avec un fluide circulant dans le dispositif d'échange thermique, depuis une entrée de fluide vers une sortie de fluide, et
- un réservoir de fluide fixé sur le dispositif d'échange thermique, comprenant des première et deuxième entrées de fluide et des première et deuxième sorties de fluide, la première entrée de fluide et la première sortie de fluide du réservoir étant reliées directement respectivement à la sortie de fluide et à l'entrée de fluide du dispositif d'échange thermique sans mise en oeuvre de tuyauterie.

De manière préférée, le module intérieur selon l'invention présente une ou plusieurs des caractéristiques suivantes, prises seules ou en combinaison :
- le module comprend en outre une source de chauffage, notamment électrique, ou de refroidissement complémentaire dans le réservoir ;
- le module comprend en outre une pompe, fixée sur l'un parmi le dispositif d'échange thermique et le réservoir de fluide, et destinée à faire circuler du fluide depuis la deuxième entrée de fluide du réservoir jusqu'à la deuxième sortie de fluide du réservoir, via le dispositif d'échange thermique ;
- la pompe étant fixée sur le réservoir, une entrée d'aspiration de la pompe est dans le réservoir, la sortie de refoulement de la pompe étant reliée à la deuxième sortie de fluide du réservoir par un conduit contenu dans le réservoir ;
- le réservoir est réalisé en matériau thermoplastique ;
- le réservoir est muni d'un fourreau, par exemple en inox, recouvrant au moins en partie la surface interne du réservoir, un espace étant de préférence ménagé entre le fourreau et la paroi du réservoir, destiné à contenir de l'eau ou de préférence de l'air ;
- le réservoir est réalisé en un matériau présentant une conduction thermique inférieure à 1 W.m⁻¹.K⁻¹ ;
- le module, en particulier le réservoir, comprend au moins l'un parmi une soupape, un débitmètre, un dispositif de vidange ou remplissage, un dispositif de piège à déchet ; et
- le réservoir comprend un conduit mettant en communication de fluide la deuxième entrée de fluide du réservoir et la première sortie de fluide du réservoir.

L'invention propose également une installation de régulation thermique fluide comprenant un module intérieur tel que décrit ci-avant dans toutes ses combinaison et une boucle incluant au moins un radiateur fluide ou un émetteur adapté au rafraîchissement par eau froide, et/ou un dispositif de plancher chauffant et/ou un dispositif de climatisation et/ou au moins un robinet et/ou au moins un échangeur thermique, la boucle étant reliée à la deuxième entrée et à la deuxième sortie du réservoir.

Selon une alternative, l'installation peut comprendre en outre une pompe à chaleur dont le condenseur est adapté à chauffer l'eau dans le dispositif d'échange thermique.

Selon une alternative, l'installation peut comprendre en outre une pompe à chaleur dont l'évaporateur est adapté à refroidir l'eau dans le dispositif d'échange thermique.

D'autres caractéristiques et avantages de l'invention apparaîtront à la lecture de la description détaillée qui suit de modes de réalisation de l'invention, donnés à titre d'exemples uniquement et en références aux dessins qui montrent :
- figure 1, un schéma d'un exemple d'installation de chauffage fluide ; et
- figures 2a et 2b, un schéma d'un exemple de module intérieur pour installation de régulation thermique à pompe à chaleur, vu respectivement de face et de côté.

Dans la suite de la description, on décrit un exemple d'une installation de chauffage à eau pour un local, étant entendu que le module intérieur pour installation de régulation thermique selon l'invention peut trouver à s'appliquer dans toute installation de régulation thermique fluide, type installation de chauffage ou installation de climatisation fluide.

Les figures 2a, 2b représentent un module intérieur 100 pour une installation de régulation thermique, en l'espèce pour une installation de chauffage à eau chaude.

Ce module intérieur 100 comprend tout d'abord un dispositif d'échange thermique 102 destiné à récupérer l'énergie puisée à l'extérieur, par exemple au moyen d'une pompe à chaleur, et à la transmettre à l'eau circulant dans le dispositif d'échange thermique 102 depuis une entrée d'eau froide 104 de l'échangeur 102 vers une sortie d'eau chaude 106 du dispositif d'échange thermique 102. Le dispositif d'échange thermique 102 est en l'espèce un condenseur d'un circuit de circulation de fluide frigorigène d'un dispositif de pompe à chaleur. Le circuit est partiellement représenté sur la figure 2b, qui montre notamment une entrée 108 de fluide frigorigène chaud sous forme gazeuse du condenseur 102, et une sortie 110 de fluide frigorigène froid sous forme liquide du condenseur 102.

Le module intérieur 100 comprend par ailleurs un réservoir de fluide 112, de forme extérieure générale cylindrique. Le réservoir 112 est fixé sur le dispositif d'échange thermique 102.

Le réservoir 112 comprend une première entrée 114 ou entrée d'eau chaude et une première sortie 116 ou sortie d'eau froide directement reliées, respectivement, à la sortie d'eau chaude 106 et à l'entrée d'eau froide 104 du dispositif d'échange thermique 102.

Par « directement reliés » on entend que les éléments en question sont reliés sans mise en oeuvre de tuyauterie. Ceci peut notamment être réalisé en choisissant une distance entre l'entré d'eau chaude 116 et la sortie d'eau froide 116 du réservoir 112 égale à la distance entre la sortie d'eau chaude 106 et l'entrée d'eau froide 104 du dispositif d'échange thermique 102. Ainsi, ces entrées et sortie peuvent être disposés en vis-à-vis, la fixation du réservoir 112 sur le dispositif d'échange thermique 102 assurant la mise en communication de fluide de ces entrées et sorties, avec une étanchéité satisfaisante. Notamment, on peut prévoir de fixer les entrées et sorties au moyen d'embouts complémentaires vissés. Pour assurer une étanchéité satisfaisante, des joints peuvent bien évidemment être mis en oeuvre au niveau de ces entrées et sorties.

Le réservoir 112 présente par ailleurs une deuxième sortie 118 ou sortie d'eau chaude et une deuxième entrée 120 ou entrée d'eau froide, destinées à être reliées à une boucle de chauffage, comprenant les émetteurs de chaleurs, alimentés en eau chaude par la boucle de chauffage.

En l'espèce, le réservoir 112 comprend un conduit 121 mettant en communication de fluide l'entrée d'eau froide 120 et la sortie d'eau froide 116 du réservoir 112.

Une source de chauffage 122, en l'espèce une source de chauffage électrique est incluse dans le réservoir 112, sous forme d'une ou plusieurs résistances électriques. Un doigt de gant entoure la ou les résistances pour éviter tout contact direct entre l'eau à chauffer et la résistance électrique. Les résistances sont fixées sur un couvercle étanche du réservoir. Ce couvercle est amovible pour facilite la maintenance. La ou les résistances peuvent être équipées d'un élément sensible à la température permettant d'arrêter leur fonctionnement si la température à l'intérieur du réservoir 112 devenait supérieure à 85°C.

Le réservoir 112 présente une forme sensiblement cylindrique pour assurer un bon compromis entre contenance et encombrement. Cette forme favorise également la résistance du réservoir à la pression exercée par l'eau qu'il contient.

Le réservoir peut notamment être réalisé en matériau plastique, par exemple en matériau thermoplastique, pour faciliter sa fabrication par moulage. Le réservoir 112 peut notamment être réalisé en deux ou trois pièces distinctes assemblées par la suite dont des couvercles.

Le matériau dans lequel le réservoir 112 est réalisé présente de préférence une conduction thermique inférieure à 1 W.m⁻¹.K⁻¹, ceci afin de limiter les pertes thermiques à travers la paroi du réservoir 112. A titre d'exemple le réservoir peut être réalisé en un matériau polymère résistant à une pression supérieure à 6 bars et à une température de 90 °C, comme par exemple un polyamide 6. 6 chargés 30 % de fibre verre.

L'intérieur du réservoir 112 peut être chemisé d'une feuille mince 124 d'acier inoxydable qui permet de protéger la paroi du réservoir en cas d'éventuelle chauffe à sec. La feuille s'étend alors sensiblement sur toute la hauteur de la source de chauffage 122, incluse dans le réservoir 112. Plus précisément, la feuille 124 s'étend sur toute la hauteur de rayonnement de la source de chauffage 122.

Un jeu peut être maintenu entre la feuille d'acier inoxydable et la paroi du réservoir, rempli d'eau ou de gaz, notamment d'air, pour améliorer l'isolation thermique du réservoir et ainsi limiter la conduction et les déperditions thermiques.

Par ailleurs, le module intérieur 100 comprend encore une pompe 126 destinée à mettre en mouvement l'eau dans le module intérieur 100 et dans la boucle d'alimentation des émetteurs de chauffage, notamment entre depuis l'entrée d'eau froide 120 du réservoir 112 jusqu'à la sortie d'eau chaude 118, via le dispositif d'échange thermique 102.

La pompe 126 est ici fixée directement sur le réservoir 112. En outre, une entrée d'aspiration de la pompe 126 est située dans le réservoir 112. La sortie de refoulement de la pompe 126 est reliée à la sortie d'eau chaude 118 du réservoir 112 par un conduit contenu dans le réservoir 112.

Le module intérieur 100 et en particulier le réservoir 112 peuvent en outre être adaptés à la mise en oeuvre de fonctions annexes. Ainsi, le module intérieur, notamment le réservoir 112, peut présenter au moins l'un parmi une soupape tarée avec une évacuation, un débitmètre, un dispositif de vidange et remplissage, un dispositif de piège à déchet réalisé avec un filtre.

Le module intérieur 100 peut notamment être mis en oeuvre dans une installation de régulation thermique, notamment dans une installation de chauffage à eau telle qu'illustrée à la figure 1.

L'installation de régulation thermique fluide comprend alors, outre le module intérieur 100, une boucle incluant au moins un radiateur fluide ou un émetteur adapté au rafraîchissement par eau froide, et/ou au moins un robinet et/ou au moins un échangeur thermique, la boucle étant reliée à la deuxième entrée et à la deuxième sortie du réservoir. La boucle peut en outre inclure un plancher chauffant ou rafraîchissant et un dispositif ventilo-convecteur de chauffe ou de rafraîchissement.

En fonction, l'installation peut en outre comprendre :
- une pompe à chaleur dont le condenseur est adapté à chauffer l'eau dans le dispositif d'échange thermique, ou
- une pompe à chaleur dont l'évaporateur est adapté à refroidir l'eau dans le dispositif d'échange thermique.

Bien entendu, la présente invention n'est pas limitée aux exemples qui viennent d'être décrits mais est susceptible de nombreuses variantes accessibles à l'homme de l'art.

Le dispositif de chauffage 122 peut prendre la forme d'un échangeur thermique provenant du circuit primaire d'un générateur appoint fossile comme une chaudière.

En outre, la pompe 126 peut être fixée sur le dispositif d'échange thermique 102.

## Revendications

1. Module intérieur (100) pour installation de régulation thermique, le module intérieur comprenant :
- un dispositif d'échange thermique (102) destiné à échanger des calories avec un fluide circulant dans le dispositif d'échange thermique (102), depuis une entrée de fluide (104) vers une sortie de fluide (106), et
- un réservoir de fluide (112) fixé sur le dispositif d'échange thermique (102), comprenant des première (114) et deuxième (120) entrées de fluide et des première (116) et deuxième (118) sorties de fluide,
**caractérisé en ce que** la première entrée de fluide (114) et la première sortie de fluide (116) du réservoir (112) sont reliées directement respectivement à la sortie de fluide (106) et à l'entrée de fluide (104) du dispositif d'échange thermique (102) sans mise en oeuvre de tuyauterie.

2. Module selon la revendication 1, comprenant en outre une source de chauffage (122), notamment électrique, ou de refroidissement complémentaire dans le réservoir (102).

3. Module selon la revendication 1 ou 2, comprenant en outre une pompe (126) fixée sur le réservoir (112), dans lequel une entrée d'aspiration de la pompe est dans le réservoir (112), la sortie de refoulement de la pompe étant reliée à la deuxième sortie de fluide (118) du réservoir (112) par un conduit contenu dans le réservoir (112) pour faire circuler du fluide depuis la deuxième entrée de fluide (120) du réservoir (112) jusqu'à la deuxième sortie de fluide (118) du réservoir (112), via le dispositif d'échange thermique (102).

4. Module selon l'une quelconque des revendications précédentes, dans lequel le réservoir (112) est réalisé en matériau thermoplastique.

5. Module selon l'une quelconque des revendications précédentes, dans lequel le réservoir (112) est muni d'un fourreau (124), par exemple en inox, recouvrant au moins en partie la surface interne du réservoir (112), un espace étant de préférence ménagé entre le fourreau (124) et la paroi du réservoir, destiné à contenir de l'eau ou de préférence de l'air.

6. Module selon l'une quelconque des revendications précédentes, dans lequel le réservoir (112) est réalisé en un matériau présentant une conduction thermique inférieure à 1 W.m⁻¹.X⁻¹.

7. Module selon l'une quelconque des revendications précédentes, dans lequel le module, en particulier le réservoir (112), comprend au moins l'un parmi une soupape, un débitmètre, un dispositif de vidange ou remplissage, un dispositif de piège à déchet.

8. Module selon l'une quelconque des revendications précédentes, dans lequel le réservoir (112) comprend un conduit mettant en communication de fluide la deuxième entrée de fluide (120) du réservoir (112) et la première sortie de fluide (116) du réservoir (112).

9. Installation de régulation thermique fluide comprenant un module intérieur selon l'une quelconque des revendications précédentes et une boucle incluant au moins un radiateur fluide ou un émetteur adapté au rafraîchissement par eau froide, et/ou un dispositif de plancher chauffant et/ou un dispositif de climatisation et/ou au moins un robinet et/ou au moins un échangeur thermique, la boucle étant reliée à la deuxième entrée et à la deuxième sortie du réservoir.

10. Installation de régulation thermique selon la revendication 9, comprenant en outre une pompe à chaleur dont le condenseur est adapté à chauffer l'eau dans le dispositif d'échange thermique.

11. Installation de chauffage selon la revendication 9, comprenant en outre une pompe à chaleur dont l'évaporateur est adapté à refroidir l'eau dans le dispositif d'échange thermique.

## Patentansprüche

1. Innenmodul (100) für eine Wärmeregulationseinrichtung, wobei das Innenmodul umfasst:
- eine Wärmetauscheinrichtung (102) zum Austausch von Kalorien mit einem in der Wärmeregulationseinrichtung (102) zirkulierenden Fluid von einem Fluidzulauf (104) zu einem Fluidausgang (106) und
- einen Fluidbehälter (112), der an der Wärmetauschvorrichtung (102) fixiert ist, umfassend einen ersten (114) und einen zweiten (120) Fluidzulauf und einen ersten (116) und einen zweiten (118) Fluidausgang, **dadurch gekennzeichnet, dass** der erste Fluidzulauf (114) und der erste Fluidausgang (116) des Behälters (112) jeweils unmittelbar ohne Rohrleitungen mit dem Fluidausgang (106) und dem Fluidzulauf (104) der Wärmetauscheinrichtung (102) verbunden sind.

2. Modul nach Anspruch 1, ferner umfassend eine - insbesondere elektrische - Wärmequelle (122) oder eine zusätzliche Kühlungsquelle im Behälter (102).

3. Modul nach Anspruch 1 oder 2, ferner umfassend eine Pumpe (126), die am Behälter (112) fixiert ist, wobei ein Ansaugeinlaß der Pumpe im Behälter (112) angeordnet ist, wobei der Druckauslaß der Pumpe über eine im Behälter (112) enthaltene Leitung an den zweiten Fluidausgang (118) des Behälters angeschlossen ist, um Fluid vom zweiten Fluidzulauf (120) des Behälters (112) bis zum zweiten Fluidausgang (118) des Behälters (112) über die Wärmetauscheinrichtung (102) zirkulieren zu lassen.

4. Modul nach einem der vorstehenden Ansprüche, wobei der Behälter (112) aus einem thermoplastischen Material besteht.

5. Modul nach einem der vorstehenden Ansprüche, wobei der Behälter (112) mit einer Hülse (124), z.B. aus Edelstahl, versehen ist, die mindestens einen Teil der Innenfläche des Behälters (112) abdeckt, wobei vorzugsweise ein Raum zwischen Hülse (124) und Behälterwand angeordnet ist, der Wasser oder vorzugsweise Luft enthalten soll.

6. Modul nach einem der vorstehenden Ansprüche, wobei der Behälter (112) aus einem Material besteht, das eine Wärmeleitfähigkeit kleiner 1 W.m⁻¹.K⁻¹ aufweist.

7. Modul nach einem der vorstehenden Ansprüche, wobei das Modul, insbesondere der Behälter (112), mindestens ein aus der nachfolgenden Gruppe gewähltes Element umfasst: ein Ventil, einen Durchflussmesser, eine Ablauf- oder Abfüllvorrichtung, eine Abfallfangvorrichtung.

8. Modul nach einem der vorstehenden Ansprüche, wobei der Behälter (112) eine Leitung umfasst, die den zweiten Fluidzulauf (120) des Behälters (112) mit dem ersten Fluidausgang (116) des Behälters (112) fluidisch verbindet.

9. Wärmeregulationseinrichtung für Fluid, umfassend ein Innenmodul nach einem der vorstehenden Ansprüche und eine Ringleitung, die mindestens einen Fluidkühler oder eine Vorrichtung zum Kühlen mittels kalten Wassers, und/oder eine Bodenheizungsvorrichtung und/oder eine Klimaanlage und/oder mindestens einen Hahn und/oder mindestens einen Wärmetauscher umfasst, wobei die Ringleitung an den zweiten Zulauf und den zweiten Ablauf des Behälters angeschlossen ist.

10. Wärmeregulationseinrichtung nach Anspruch 9, ferner umfassend eine Wärmepumpe, deren Kondensator dazu geeignet ist, das Wasser in der Wärmetauscheinrichtung zu erwärmen.

11. Wärmeregulationseinrichtung nach Anspruch 9, ferner umfassend eine Wärmepumpe, deren Verdampfer dazu geeignet ist, das Wasser in der Wärmetauscheinrichtung abzukühlen.

## Claims

1. Interior module (100) for a thermal regulation installation, wherein the interior module comprises:
- a heat exchange device (102) for exchanging calories with a fluid circulating in the heat exchange device (102) from a fluid inlet (104) to a fluid outlet (106), and
- a fluid reservoir (112) fixed on the heat exchange device (102), comprising first (114) and second (120) fluid inlets and first (116) and second (118) fluid outlets, **characterized in that** the first fluid inlet (114) and the first fluid outlet (116) of the reservoir (112) are directly and respectively connected to the fluid outlet (106) and the fluid inlet (104) of the heat exchange device (102) without the use of piping.

2. Module according to claim 1, further comprising a heating source (122), in particular electric, or complementary cooling in the reservoir (102).

3. Module according to claim 1 or 2, further comprising a pump (126) attached to the reservoir (112), wherein a suction inlet of the pump is in the reservoir (112), while the discharge outlet of the pump is connected to the second fluid outlet (118) of the reservoir (112) by a duct contained in the reservoir (112) for circulating fluid from the second fluid inlet (120) of the reservoir (112) to the second fluid outlet (118) of the reservoir (112) via the heat exchange device (102).

4. Module according to any one of the preceding claims, wherein the reservoir (112) is made of thermoplastic material.

5. Module according to any one of the preceding claims, wherein the reservoir (112) is provided with a sheath (124), for example made of stainless steel, at least partially covering the inner surface of the reservoir (112), wherein a space is preferably arranged between the sheath (124) and the reservoir wall that is intended to contain water or preferably air.

6. Module according to any one of the preceding claims, wherein the reservoir (112) is made of a material having a thermal conduction less than 1 W.m⁻¹.K⁻¹.

7. Module according to any one of the preceding claims, in which the module, in particular the reservoir (112), comprises at least a valve, a flowmeter, a device for emptying or filling, a waste trap device.

8. Module according to any one of the preceding claims, wherein the reservoir (112) comprises a duct for fluid communication with the second fluid inlet (120) of the reservoir (112) and the first fluid outlet (116) of the reservoir (112).

9. Fluid thermal control system comprising an interior module according to any one of the preceding claims and a loop including at least one fluid radiator or an emitter designed for cold water cooling, and/or a floor heating device and/or an air conditioning device and/or at least one valve and/or at least one heat exchanger, wherein the loop is connected to the second inlet and the second outlet of the reservoir.

10. Thermal regulation installation according to claim 9, further comprising a heat pump whose condenser is designed to heat the water in the heat exchange device.

11. Heating installation according to claim 9, further comprising a heat pump whose evaporator is designed to cool the water in the heat exchange device.
